# EUROPÄISCHE PATENTSCHRIFT

(11) **EP 1 268 698 B1**
(45) Veröffentlichungstag und Bekanntmachung des Hinweises auf die Patenterteilung: **26.05.2004**
(21) Anmeldenummer: 01915424.4
(22) Anmeldetag: 30.03.2001
(51) Int. Cl.: C09J 125/14, C09J 133/06

(54) **MONTAGEKLEBSTOFF AUF DER BASIS EINER WÄSSRIGEN POLYMER-DISPERSION**
ASSEMBLY ADHESIVE ON THE BASIS OF AN AQUEOUS POLYMER DISPERSION
ADHESIF D'ASSEMBLAGE A BASE D'UNE DISPERSION POLYMERE AQUEUSE

(30) Priorität: 04.04.2000 DE 10016673
(43) Veröffentlichungstag der Anmeldung: 02.01.2003
(73) Patentinhaber: Henkel Kommanditgesellschaft auf Aktien, 40589 Düsseldorf (DE)
(72) Erfinder: LEWIN, Anke, 40217 Düsseldorf (DE); KLAUCK, Wolfgang, 40670 Meerbusch (DE); SCHILLING, Gaby, 40219 Düsseldorf (DE); MAJOLO, Martin, 41812 Erkelenz (DE)
(86) Internationale Anmeldenummer: PCT/EP2001/003627
(87) Internationale Veröffentlichungsnummer: WO 2001/074961

(56) Entgegenhaltungen:
- GB-A- 2 061 990
- US-A- 4 661 548

## Beschreibung

Die Erfindung betrifft einen Klebstoff auf der Basis einer wäßrigen Polymer-Dispersion unter Zusatz von Verdickungsmitteln sowie gegebenenfalls von Füllstoffen, Pigmenten, Konservierungsmitteln, Lösemitteln, Weichmachern und weiteren Hilfsstoffen. Die Erfindung betrifft ebenfalls seine Herstellung und seine Verwendung als Montageklebstoff.

Unter einem Montageklebstoff soll eine Zusammensetzung verstanden werden, die sich aufgrund folgender Eigenschaften zur Montage vor allem in der Bauindustrie eignet:
- eine sehr hohe Anfangshaftung bei einer letztlich guten Belastbarkeit der Verklebung von Holz, Metall, Keramik, PVC und weiteren Kunststoffen im Innen- und Außenbereich, aber auch besondere Fähigkeiten bezüglich
- Spaltüberbrückung,
- Haftungsspektrum und
- Flexibilität.

Eine bevorzugte Anwendung von Montageklebem ist das schnelle und dauerhafte Befestigen von Gegenständen an Decken, Wänden und Böden. Besonders wünschenswert ist dabei die schnelle und einfache Montage schwerer Gegenstände, ohne daß nach dem Auftragen der Klebemasse eine zusätzliche Fixierung notwendig ist (z.B. beim Verkleben von Klinkem, Steinen, Ziegelsteinen, Paneelen, Deckenplatten, usw.). Zudem muß die Klebemasse in der Lage sein, Materialunebenheiten zu überbrücken (Spattüberbrückung).

Die bisher auf dem Markt bekannten Montagekleber haben eine maximale Anfangshaftung von 10 gcm⁻². Damit ist zwar eine Montage von leichten Gegenständen ohne die zusätzliche Fixierung des Gegenstandes möglich, allerdings treten Probleme auf, wenn es sich um schwere Gegenstände, wie z.B. Deckenplatten, handelt. Weitere Montageprobleme gibt es bei der Montage von Gegenständen, die unter Spannung stehen (z.B. gebogene Fußleisten). Diese Gegenstände müssen zusätzlich fixiert werden, bis die Klebemasse ausgehärtet ist. Solche Montageanwendungen sind immer mit einem zeitraubenden, teilweise auch komplizierten Mehraufwand verbunden.
Man unterscheidet vier Arten von Montageklebem:
a) lösemittelhaltige Systeme,
b) reaktive Systeme,
c) Schmelzklebstoffe (Hotmelts),
d) wasserbasierte Systeme.

Lösemittelhaltige Montagekleber sind besonders bei großflächigen Verklebungen im Innenbereich unbeliebt, da es häufig zu Geruchsbelästigungen durch freiwerdende Lösemitteldämpfe kommt. Die Vorteile liegen bei der Verwendung von lösemittelhaltigen Systemen darin, daß das vorhandene Lösemittel schnell aus der Klebemasse entweichen kann und so relativ schnell eine hohe Haftung für Montagearbeiten erzielt werden kann.

Reaktive Systeme und Hotmelts benötigen zur Verarbeitung entweder Spezialbedingungen/-geräte oder sie brauchen eine relativ lange Zeit, um genügende Haftungseigenschaften für Montagearbeiten zu entwickeln.

Wasserbasierte Systeme haben den Nachteil, das vorhandene Wasser nur langsam abzugeben. Der Aushärtevorgang der Klebemasse ist daher relativ langsam. Der große Vorteil der wasserbasierten Systeme liegt darin, daß keine Geruchsbelästigungen oder/und Gesundheitsgefährdungen durch freigesetzte Lösemittel auftreten. Allerdings gab es bisher keine Montagekleber mit Haftungswerten > 10, insbesondere > 15 gcm⁻².

Beim extremen Verdicken von Acrylatdispersionen mit höheren Konzentrationen an Acrylatverdickern zum Erreichen einer hohen Anfangshaftung (insbesondere über die Viskosität) wurden in der Vergangenheit lediglich sehr hochviskose Klebemassen erhalten, die sich schlecht verarbeiten ließen, nicht lagerstabil waren und ein schlechtes Benetzungsverhalten an den zu verklebenden Substraten zeigten.
In der GB 2 061 990 wird ein Klebstoff zum Fixieren von Keramik-Fliesen beschrieben. Er enthält
- 2 bis 50 Gew.-% einer wäßrigen Dispersion oder Lösung eines organischen Polymeren mit einem Feststoff-Anteil von 30 bis 70 %,
- 40 bis 80 Gew.-% eines anorganischen Füllstoffes,
- 0,5 bis 15 Gew.-% eines organischen Additivs und
- 0 bis 10 Gew.-% an Hilfsstoffen.
In den Beispielen werden Klebstoffe aus folgenden Komponenten hergestellt:
- 100 Gew.-Teile eines Styrol/Acrylat-Copolymeren in Form einer Dispersion mit 45 % Feststoffanteil,
- 450 Gew.-Teile an Sand mit unterschiedlichen Komgrößen,
- 5 Gew.-Teile eines Koaleszenz-Lösemittels auf der Basis eines aromatischen Glykol-Ethers,
- 1 bis 2 Gew.-Teile an Celluloseether mit einer Viskosität von 15000 als Verdickungsmittel,
- 2 bis 1 Gew.-Teil an Aerosil und
- 50 bis 55 Gew.-Teile an Wasser.
Als organische Verdickungsmittel werden neben Celluloseether auch Polyacrylate genannt. Mit diesem Klebstoff sollen Keramik-Fliesen auf dem Boden fixiert werden. Es lassen sich angeblich aber auch Keramik-Fliesen an Wänden fixieren. Nachteilig an diesem bekannten Klebstoff ist, daß seine Anfangshaftung noch zu gering ist, um schwere Gegenstände wie z.B. Ziegel an Wänden sofort nach dem Egalisieren des Klebstoffes zu fixieren.

Die erfindungsgemäße Aufgabe besteht in der Bereitstellung eines lagerstabilen Klebstoffes mit sehr hoher Anfangshaftung zum Fixieren schwerer Gegenstände. Dabei sollte die Anwendung des Klebstoffes leicht möglich sein. Das gilt insbesondere für den Auftrag des Klebstoffes und seine Verteilung auf dem Substrat.

Die erfindungsgemäße Lösung ist den Patentansprüchen zu entnehmen. Sie besteht in erster Linie in einer Zusammensetzung, die aus folgenden Komponenten herstellbar ist:
A) 10 bis 98, insbesondere 51 bis 88 und vor allem 60 bis 70 Gew.-% mindestens einer Dispersion eines Copolymeren aus mindestens Styrol und einem Alkylacrylat bzw. Alkylmethacrylat mit 1 bis 12, insbesondere 2 bis 8 C-Atomen im Alkyl-Rest, wobei der Feststoffgehalt im Bereich von 30 bis 80, insbesondere von 40 bis 65 Gew.-% liegt,
B) ein Verdickungsmittel aus einer Kombination von
   a) 0,4 bis 6, insbesondere 0,5 bis 5 und vor allem 1 bis 3 Gew.-% hochdisperser Kieselsäure als anorganischem Verdickungsmittels sowie
   b) 1 bis 10, insbesondere 1,5 bis 5 Gew.-% eines wäßrigen Systems eines Copolymeren auf der Basis von mindestens Acrylsäure und Acrylamid mit einem Feststoffgehalt von 10 bis 40, insbesondere von 25 bis 35 Gew.-%,
   wobei dieses wäßrige System bis zu 90, insbesondere bis zu 50 Gew.-% ersetzt werden kann durch mindestens eine der folgenden wäßrigen Polymer-Dispersionen, enthaltend Polymere auf der Basis von Acrylaten, Copolymerisate auf der Basis von Acrylsäure und Methacrylsäure und wasserlösliche Polyurethane mit einem Feststoffgehalt von 20 bis 40, insbesondere von 25 bis 35 Gew.-%,
C) 0 bis 88, insbesondere 20 bis 35 Gew.-% an anorganischen oder organischen Füllstoffen, insbesondere Kreide, Kalksteinmehl, Sand, Marmormehl oder Titandioxid,
D) 0 bis 2 Gew.-% an anorganischen oder organischen Pigmenten, insbesondere Eisenoxide,
E) 0 bis 3, insbesondere 0 bis 1 Gew.-% an Hilfsstoffen, insbesondere Dispergierhilfsmittel wie Pigmentverteiler A und Konservierungsmittel,
F) 0 bis 40, insbesondere 0 bis 10 Gew.-% an Weichmachern und
G) Wasser.

Bei den Styrol/Methacrylat- bzw. Styrol/Acrylat-Copolymeren sollte der Gewichtsanteil von Styrol im Bereich von 30 bis 100, insbesondere von 50 bis 100 Gew.-% liegen. Das Styrol-Comonomer kann substituiert sein, z.B. mit einem Methylsubstituenten,
Die Alkylgruppe des Acrylates kann linear, verzweigt oder cyclisch sein, gegebenenfalls auch substituiert. Beispiele sind Methyl-, Ethyl-, Isopropyl-, Butyl-, Dodecyl-, Cyclohexyl-, 2-Ethylhexyl- und 2-Hydroxyethyl-.
Die Acrylsäureester können auch reaktive Gruppen für eine spätere Nachvemetzung enthalten. Solche reaktiven Gruppen können auch Vinyl-Comonomere enthalten, z.B. eine Silan-Gruppe. Die Si(Alk)₃-Gruppe kann direkt oder über einen (CH₂)ₙ-Rest mit der Vinylgruppe verbunden sein, dabei kann n eine Zahl von 2 bis 6 sein, vorzugsweise ist n 3 oder 0. Die Alkyl-Gruppen können 1 bis 4 C-Atome enthalten, vorzugsweise 1 oder 2. Weitere Comonomere können sein: Vinylester, Maleinsäureester (jeweils ebenfalls mit 1 bis 12, vorzugsweise 2 bis 8 C-Atomen in der Alkoholkomponente), Ethylen, Acrylamid, Acrylsäure, Butadien, Acrylnitril, und zwar sowohl einzeln als auch im Gemisch. Das Molekulargewicht liegt über 100 000 g/mol. Handelsübliche Styrol-Copolymerisate sind: Acronal 290 D, Scopacryl D 343, Ubatol VAF 1539, Acronal S 360 D, Scopacryl PAA D 8875, Acronal S 400, Acronal S 401, Styrofan A 900, Rhodopas DS 913, Joncryl 678, Vinnapas LL 6010 und SAF 54, Neocryl A 621 (Copolymere aus Styrol, Acrylsäureester). Pliotec LS 1 (Terpolymer aus Styrol, Butylacrylat, Methacrylsäure), Mowilith DM 611, Mowilith DM 680, Styropor P 555 (Reinstyrol), Buna EM 2116, Styrolux 684 D, Rhodopas SB 012, (Copolymere aus Styrol, Butadien, Novodur P2M, Synthomer VL 10286 (Terpolymere aus Styrol, Butadien und Acrylnitril). Besonders bevorzugt sind: DL 345 von Union Carbide, Rhodapas DS 910 von Rhone Poulenc, Revacryl 248 von der Fa. Harco / Clariant und Primal P 308 M von Rohm and Haas. Es können auch Gemische verschiedener Styrolacrylat-Copolymer-Dispersionen eingesetzt werden.

Die Styrol-Copolymerisate. können nach bekannten Verfahren hergestellt werden, insbesondere durch Emulsions- oder Perlpolymerisation. Dabei entstehen wäßrige Dispersionen mit einer Konzentration von ca. 40 bis 70 Gew.-% an Styrol-Copolymerisat. Ihre Herstellung in Masse oder Lösung ist aber ebenfalls möglich.

Bei den Verdickungsmitteln handelt es sich um in der Regel hochmolekulare Stoffe, die entweder Wasser aufsaugen und dabei aufquellen oder intermolekulare Gitterstrukturen bilden. Die organischen Verdickungsmittel gehen schließlich in eine zähflüssige echte oder kolloidale Lösung über.
Bei dem anorganischen Verdickungsmittel handelt es sich um die hochdisperse, insbesondere pyrogene Kieselsäure, sei es in hydrophiler oder in hydrophober Form. Die bevorzugte hydrophile Kieselsäure wird von einem wäßrigen System mit überwiegendem Wasser-Anteil, insbesondere von reinem Wasser benetzt und fällt bei der Flammenhydrolyse an. Die hydrophobe Kieselsäure erhält man daraus, z.B. durch Reaktion mit Organosilanen. Die Oberfläche liegt vor allem im Bereich von 125 bis 400 m²/g, gemessen nach der BET-Methode gemäß DIN 66131. Die hochdisperse Kiselsäure kann sowohl als Pulver als auch als wäßrige Dispersion eingesetzt werden. Beispiel sind: HDK der Firma Wacker und Aerosil der Firma Degussa-Hüls.
Das organische Verdickungsmittel enthält ein wäßriges System eines Copolymeren auf der Basis von mindestens Acrylsäure und Acrylamid, vorzugsweise emulgiert in einer Ölfraktion, insbesondere einer Erdölfraktion. Es kann aber auch ganz allgemein eine wäßrige Dispersion des Copolymeren sein oder eine wäßrige Lösung. Der Feststoffgehalt des Systems beträgt 10 bis 40, insbesondere 25 bis 35 % gemäß DIN 53189 bzw ISO - 1625. Ihr pH-Wert nach ISO 1148 bzw. DIN 53785 liegt vor allem im Bereich von 7,5 bis 9. Konkrete Beispiele für die W/O-Emulsion sind Collacral HP der Firma BASF sowie Texipol-Typen der Fa. Scott-Bader.

Bei den hilfsweise eingesetzten organischen Verdickern handelt es sich um wäßrige Dispersionen bzw. Lösungen, die das wäßrige System des Copolymeren auf der Basis von mindestens Acrylsäure und Acrylamid, vorzugsweise die W/O-Emulsion bis zu 90, insbesondere bis zu 50 Gew.-% ersetzen können. Konkrete Beispiele dafür sind
- der wasserlösliche Polyurethan-Verdicker Nopco DSX 3290 der Firma Cognis,
- die wäßrige Lösung des Terpolymeren aus Acrylaten und Methacrylaten sowie Carboxylgruppen enthaltenden Comonomeren Indunal T 112 der Firma Indulor Chemie (Dabei handelt es sich um einen assoziativen anionischen Verdicker.),
- die Acrylatpolymer-Dispersion Acrysol TT 615 der Firma Rohm & Haas (Dabei handelt es sich um eine alkaliquellbare anionische Dispersion mit einem Feststoffgehalt von ca. 30 Gew.-%.),
- Polymerdispersion auf der Basis von Acrylsäure und Acrylamid.

Die Füllstoffe dienen dazu, den Schwund zu reduzieren und die Konsistenz zu beeinflussen. Konkrete Beispiele sind insbesondere die Kreide-Typen Omyacarb der Firma Omya.

Als weitere anorganische Füllstoffpartikel eignen sich beispielsweise Füllstoffpartikel aus Andalusit, Sillimanit, Kyanit, Mullit, Pyrophyllit, Imogolit oder Allophan. Weiterhin geeignet sind Verbindungen auf der Basis von Natriumaluminaten oder Calciumsilikaten. Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer löslichen Sulfate, wie Gips, Anhydrit oder Schwerspat, sowie Calciummineralien, wie Calcit oder Kreide (CaCO₃). Die genannten anorganischen Materialien können einzeln eingesetzt werden. Es ist jedoch ebensogut möglich, ein Gemisch aus zwei oder mehreren der genannten Verbindungen einzusetzen.

Die Füllstoffpartikel weisen einen x50-Wert für die durchschnittliche Teilchengrößenverteilung von etwa 1 bis etwa 120 µm, beispielsweise etwa 3 bis etwa 60 oder etwa 60 bis etwa 90 µm auf, gemessen mit Sympatec Helos H 0720 in Isopropanol.

Ebenfalls zum Einsatz geeignet sind organische Füllstoffpartikel, die sich nicht ohne weiteres zu den wasserlöslichen oder wasserdispergierbaren Polymeren einordnen lassen. Hierzu zählen insbesondere feinvermahlene Kunststoffmehle, wie sie beim Recycling von Kunststoffen anfallen können. Insbesondere zählen hierzu Kunststoffmehle, wie sie aus der Feinvermahlung von hochvernetzten elastomeren oder duromeren Polymeren erhältlich sind. Ein Beispiel hierfür ist Gummimehl wie es beispielsweise durch Feinvermahlung von Autoreifen entsteht.

Die Pigmente dienen dazu, den Montageklebstoff einzufärben. Bevorzugt sind organische Pigmente und Eisenoxide. Konkrete Beispiele sind die Bayferrox-Typen der Fa. Bayer.

Als Weichmacher werden vor allem Fettstoffe eingesetzt, und zwar in einer Menge von 0 bis 60, vorzugsweise 1 bis 50 und insbesondere 10 bis 40 Gew.-%, bezogen auf das Polystyrol. Es können auch 0 bis 40, insbesondere 0 bis 10 Gew.-% eingesetzt werden, bezogen auf den Montageklebstoff. Unter Fettstoffen werden Fettsäuren, Fettalkohole oder deren Derivate verstanden, insbesondere Triglyceride von höheren Fettsäuren und vorzugsweise natürliche Fette und Öle. Wegen Einzelheiten wird ausdrücklich auf die WO 97/07173 Bezug genommen.

Zu den Hilfsstoffen gehören:
- Konservierungsmittel zur Vermeidung von Pilz- und Bakterien-Befall. Konkrete Konservierungsmittel sind JMAC-LP, 1 %ig der Firma Johnson & Matthey, Mergal KM 3 der Firma Troy Chemie GmbH.
- Lösungsmittel zur Beeinflussung der offenen Zeit und der mechanischen Eigenschaften. Ein konkretes Beispiel ist Butylglykol.
- Dispergierhilfen zur Verbesserung des Benetzungsverhaltens der Klebstoffe. Ein konkretes Beispiel ist der Pigmentverteiler A der Firma BASF.
- Ein Koaleszenz-Mittel ist normalerweise nicht erforderlich.
- Auch ein Zusatz von Lösungsmittel ist nicht notwendig.
Die restliche Komponente zu 100 Gew.-% ist Wasser.
Der pH-Wert des Montageklebstoffes liegt in der Regel oberhalb von 7, vorzugsweise im Bereich von 7 bis 10. In diesem pH-Bereich ist der Verdickungseffekt mit den eingesetzten Verdickungsmitteln am günstigsten. Bei pH-Werten > 10 wird eine Zersetzung der eingesetzten Acrylatverdicker beobachtet, die Verdickungswirkung läßt stark nach. Bei pH-Werten < 7 nimmt die Verdickungswirkung der eingesetzten Verdickungsmittel ebenfalls deutlich ab.

Die hohe Anfangshaftung des Montageklebstoffes beruht im wesentlichen auf der besonderen Rheologie. Im Ruhezustand ist der Montageklebstoff praktisch formstabil. Bei der mechanischen Verarbeitung hingegen nimmt die Viskosität ab, so daß sich die Klebemasse gut rühren und verarbeiten läßt. Unter Einwirkung von Scherwirkung nimmt die Viskosität ab. Daher läßt sich die Klebemasse z.B. sehr gut aus einer Kartusche ausdrücken. Sobald die Scherkräfte nicht mehr auf die Klebemasse einwirken, erreicht die Klebemasse wieder ihre ursprüngliche Viskosität. Ein zeitverzögerter Viskositätsaufbau ist praktisch nicht zu beobachten.

Der erfindungsgemäße Montageklebstoff wird im allgemeinen folgendermaßen hergestellt: Alle Komponenten außer dem wäßrigen System des Copolymeren aus Acrylsäure und Acrylamid werden bei Raumtemperatur (ca. 20 °C) mit einem Planetenrührer mit Dissolver-Scheibe mit einer Rührgeschwindigkeit von 50 UpM und einer Dissolvergeschwindigkeit von ca. 1 000 UpM innerhalb von ca. 30 Min. zu einer optisch homogenen Masse gerührt. Dann wird das wäßrige System des Polymeren auf der Basis von Acrylsäure und Acrylamid zugesetzt und das Rühren für weitere ca. 10 Min. fortgeführt. Vorzugsweise wird zum Schluß für 5 Min. ein Vakuum von ca. 10 mbar angelegt und dann belüftet. So wird durch Zusatz der Komponente Bb) zu der Mischung der übrigen Komponenten eine cremige streichfähige formstabile Masse erhalten.

Die Anwendung des Klebstoffes ist für jedermann leicht möglich, und zwar ohne Spezialgeräte wie z.B. Hotmeltpistolen, UV-Lampen und ohne komplizierte Anwendungsvorhaben wie z.B. Mischen von Komponenten in bestimmten Verhältnissen, Auftragen von Primern usw. wie bei bekannten Montageklebstoffen.

Der erfindungsgemäße Montageklebstoff wird zweckmäßigerweise in Kartuschen verpackt, aus denen er mit einer handelsüblichen Pistole leicht gedrückt werden kann. Er kann aber auch in Eimern, Tuben und Druckbehältern gemäß TRG 300 verpackt werden.
Gegenstand der Anmeldung ist auch ein so verpackter Klebstoff, insbesondere der Klebstoff in der Kartusche.

Der aufgetragene Klebstoff läßt sich wegen seiner cremigen Konsistenz leicht egalisieren.
Er kann zum Kleben, Beschichten, Dichten und Füllen verwendet werden, insbesondere zum Verkleben von Konstruktionen aus Holz, Keramik, Glas, Zement, Metall und Kunststoffen.
Seine Schichtdicke kann bis zu 30 mm, insbesondere 1 bis zu 20 mm betragen.

Die sich ergebenden Klebstoffformulierungen zeichnen sich durch folgende Merkmale aus und heben sich damit vom Leistungsspektrum anderer Montagekleber auf Basis wäßriger Dispersionen, insbesondere gegenüber dem Klebstoff nach der GB 2 061 990 deutlich ab:
1. Die Anfangshaftungen, die mit den oben beschriebenen Formulierungen erreicht werden, liegen weit über den bisher für Montagekleber auf Dispersionsbasis bekannten Haftungswerten. Bisherigen Untersuchungen von Montageklebstoffen auf Basis von Polymerdispersionen lieferten maximale Werte für die Anfangshaftung von 10 g/cm⁻². Die oben beschriebenen Formulierungen hingegen liefern Anfangshaftungen von mehr als 10, insbesondere ≥ 15 g/cm⁻² oder gar ≥ 20 g/cm⁻².
2. Die oben aufgeführten Klebstoffformulierungen zeigen ein stark strukturviskoses Verhalten, wodurch sie leicht zu verarbeiten und leicht handhabbar sind. Die Extrusionsrate nach ISO 9048 kann je nach Zusammensetzung in weiten Bereichen variieren. Sie liegt im allgemeinen zwischen 1 000 und 7 000, insbesondere zwischen 2 000 und 5 000 g/min bei 23 °C und einem Düsendurchmesser von 4 mm. Trotz sehr hoher Viskosität weisen die Formulierungen ein gutes Benetzungsverhalten auf und sind z.B. mit einer normalen Kartuschenpistole aus einer Kartusche ausdrückbar. Dennoch sind sie dann praktisch sofort nicht nur standfest, sondern vermögen auch schwere Gegenstände ohne eine Hilfe zu fixieren.
3. Da es sich um einen Klebtoff auf Dispersionsbasis handelt, werden beim Trocknen des Klebers keine organischen Lösemittel freigesetzt. Die Trocknung erfolgt somit nahezu geruchsfrei. Eine Belästigung durch Lösemitteldämpfe entfällt. Damit ist der Klebstoff besonders gut zum großflächigen Verkleben im Innenbereich einsetzbar, zumal seine offene Zeit leicht variiert werden kann und im allgemeinen bis 40, insbesondere bis zu 30 min reicht.
4. Es sind keine Spezialgeräte zur Verarbeitung notwendig, wie beispielsweise bei der Anwendung von Schmelzklebstoffen die Schmelzklebstoffpistole. Gegenstand der Anmeldung ist daher auch die Applikation des erfindungsgemäßen Klebstoffes aus einer Kartusche. Danach kann er z.B. mit einem Spachtel leicht verstrichen werden.
5. Die Lagerzeit beträgt > 18 Monate aufgrund der unveränderten Extrusionsrate nach ISO 9048 nach einer Lagerung von 6 Monaten bei 50 °C.

Die Erfindung wird durch folgende Beispiele im einzelnen beschrieben:

### I. Herstellung des Montageklebstoffes

Aus folgenden Komponenten (in Gew.-%) wurde - wie oben beschrieben ― ein Montageklebstoff hergestellt:

| | | |
|---|---|---|
| 1. | Styrol/Acrylat-Copolymer-Latex mit einem Feststoffanteil von ca. 50 Gew.-% (Ucar-Latex-DL-345, Union Carbide) | 64,75 |
| 2. | hydrophile hochdisperse Kieselsäure (Kieselsäure-HDK-T-30, Wacker) | 2,0 |
| 3. | Acrylsäure/Acrylamid-Copolymer, als wäßrige Lösung emulgiert in aliphatischer Erdölfraktion (Collacral-HP, BASF) | 2,0 |
| 4. | Marmor metamorph (Omyacarb-5-GU, Omya) | 29,9 |
| 5. | Dispergierhilfsmittel Polyacrylsäure-Ammonium-Salz (Pigmentverteiler-A, BASF) | 1,0 |
| 6. | Silberchlorid/Titanoxid-Zubereitung in Wasser/EtOH/anionische Tenside (JMAC-LP 1 %, Johnson Matthey) | 0,05 |
| 7. | Wasser | |

Er ist durch folgende Eigenschaften gekennzeichnet:
a) Die Anfangshaftung liegt zwischen 28 gcm⁻² und 30 gcm⁻².
b) Die Masse ist mit einer Standardkartuschenpistole (z.B. Klapp Pistole DW 111 der Fa. Henkel oder Kartuschenpistole DW 100 der Fa. Henkel) aus einer Kartusche ausdrückbar.
c) Extrusions-Rate: 3 200 bis 5 000 g/min nach ISO 9048 (Druck: 2 bar, Temperatur 23 ± 2 °C, 50 ± 5 % rel. Luftfeuchte, Extrusions-Vorrichtung mit einem inneren Durchmesser von 5,0 cm, einer Länge von 18 cm und einem Düsendurchmesser von 4 mm).
d) Offene Zeit: 15 bis 25 min.
e) Dichte: 1,3 g/cm³ nach Erichsen.

### II. Klebetechnische Eigenschaften

Seine klebetechnischen Eigenschaften sind durch folgende Versuche beschrieben.

### 1. Methode zur Bestimmung der Anfangshaftung

Auf einem 15 x 3 cm langem Prüfkörper von unbehandeltem Holz (Buchensperrholz) mit einem 8 mm großen Loch an einer Seite wird eine Markierung angebracht. Die Markierungslinie ist 10 cm von der 3 cm langen Seite entfernt, die nicht mit einem Loch durchbohrt ist:

Auf die markierte Fläche von 10 x 3 cm wird ein Klebefilm von ca. 2 cm Breite und 2 mm Dicke aufgetragen. Anschließend werden in die Mitte des Klebestreifens kleine Kugeln von 2 mm Durchmesser gedrückt, um die exakte Dicke des Klebefilms zu gewährleisten. Der Abstand der Kugel voneinander beträgt ca. 2 cm, die Kugeln befinden sich auf einer gedachten, geraden Linie in der Mitte des aufgetragenen Klebstoffstreifens.
Nach dem Einbringen der Kugeln in die Klebstoffschicht wird eine Aluschiene (anodisiertes Aluminium) von 15 x 1,5 cm auf die Kugeln gedrückt. Die verwendete Aluschiene besitzt an einer Seite eine Bohrung von 8 mm Durchmesser. Die Schiene wird in der Art auf die Klebstoffschicht aufgesetzt, daß die Bohrung nicht in der Klebstoffschicht liegt, die Abschlußkante der Schiene aber mit der in der oben gezeigten Abbildung eingezeichneten Markierung abschließt:

Für die Messung wird der Prüfkörper an einer Federwaage aufgehangen, und zwar wird der Haken der Federwaage in die Bohrung auf der Holzteiste eingehakt. Anschließend wird langsam und gleichmäßig, in senkrechter Richtung zur Holzplatte, an der Aluschiene gezogen, bis ein Abrutschen der Schiene von der Klebstoffschicht zu erkennen ist. Der Wrt, an dem die Schiene ins Rutschen gerät, wird an der Federwaage abgelesen. Der gemessene Wert repräsentiert die Anfangshaftung für eine Fläche von 15 cm². Teilt man den erhaltenen Wert durch 15, so erhält man einen Haftungswert in g/cm².

### 2. Ergebnisse

Es wurde ein Haftungswert von 30 g/cm² erhalten. Das reicht aus, um einen Backstein von 3,4 kg und einer Fläche von 11 x 21 cm sofort an einer senkrechten Wand zu fixieren, und zwar bis zu einer Schichtdicke von ca. 5 mm.

## Patentansprüche

1. Klebstoff auf der Basis einer wäßrigen Polymer-Dispersion unter Zusatz von Verdickungsmitteln sowie gegebenenfalls von Füllstoffen, Pigmenten, Konservierungsmitteln, Lösemitteln, Weichmachern sowie weiteren Hilfsstoffen, **dadurch gekennzeichnet, daß** er herstellbar ist aus
A) 10 bis 98 Gew.-% mindestens einer wäßrigen Dispersion eines Copolymeren zumindest aus Styrol und Alkylacrylat bzw. Alkylmethacrylat mit 1 bis 12 C-Atomen im Alkyl-Rest, wobei der Feststoffgehalt 30 bis 80 Gew.-% beträgt,
B) einem Verdickungsmittel aus der Kombination von mindestens
a) 0,4 bis 6 Gew.-% hochdisperser Kieselsäure als anorganischem Verdickungsmittels sowie
b) 1 bis 10 Gew.-% eines wäßrigen Systems eines Polymeren auf der Basis von zumindest Acrylsäure und Acrylamid mit einem Feststoffgehalt von 10 bis 40 Gew.-%, wobei bis zu 90 Gew.-% dieses wäßrigen Systems ersetzt werden kann durch mindestens eine der folgenden Dispersionen auf der Basis eines Polymeren auf der Basis von Acrylaten, eines Copolymeren auf der Basis von mindestens Acrylsäure und Methacrylsäure oder auf der Basis von Polyurethanen mit einem Feststoffgehalt von 20 bis 40 Gew.-%,
C) 0 bis 88 Gew.-% an Füllstoffen,
D) 0 bis 2 Gew.-% an Pigmenten,
E) 0 bis 3 Gew.-% an Hilfsstoffen,
F) 0 bis 40 Gew.-% an Weichmacher sowie
G) Wasser.

2. Klebstoff nach Anspruch 1, enthaltend
A) 51 bis 98 Gew.-% der Styrol/Acrylat-Copolymer-Dispersion,
B)
a) 1 bis 3 Gew.-% an hochdisperser Kieselsäure,
c) 1 bis 5 Gew.-% an Acrylsäure/Acrylamid-Copolymer-W/O-Emulsion.

3. Klebstoff nach Anspruch 1 oder 2, **gekennzeichnet durch** einen pH-Wert von >7, insbesondere von 7 bis 10.

4. Herstellung des Klebstoffes nach einem der Ansprüche 1 bis 3, **dadurch gekennzeichnet, daß** man das wäßrige System des Polymeren auf der Basis von zumindest Acrylsäure und Acrylamid (Komponente Bb) zum Schluß den restlichen Komponenten zumischt.

5. Verwendung des Klebstoffes nach mindestens einem der Ansprüche 1, 2 oder 3, **dadurch gekennzeichnet, daß** der Klebstoff aus einer Kartusche appliziert wird.

6. Verwendung nach Anspruch 5, wobei der Klebstoff mit einer Dicke bis zu 30, insbesondere bis zu 20 mm auf das Substrat aufgetragen wird.

## Claims

1. An adhesive based on an aqueous polymer dispersion containing added thickeners and optionally fillers, pigments, preservatives, solvents, plasticizers and other auxiliaries, **characterized in that** it can be produced from the following components:
A) 10 to 98% by weight of at least one aqueous dispersion of a copolymer of at least styrene and an alkyl acrylate or alkyl methacrylate containing 1 to 12 carbon atoms in the alkyl group, the solids content of the dispersion being in the range from 30 to 80% by weight,
B) a thickener of a combination of at least
a) 0.4 to 6% by weight of highly disperse silica as an inorganic thickener and
b) 1 to 10% by weight of an aqueous system of a polymer based on at least acrylic acid and acrylamide with a solids content of 10 to 40% by weight, up to 90% by weight of this aqueous system being replaceable by at least one of the following dispersions based on a polymer based on acrylates, a copolymer based on at least acrylic acid and methacrylic acid or on polyurethanes with a solids content of 20 to 40% by weight,
C) 0 to 88% by weight of fillers,
D) 0 to 2% by weight of pigments,
E) 0 to 3% by weight of auxiliaries,
F) 0 to 40% by weight of plasticizers and
G) water.

2. An adhesive as claimed in claim 1 containing
A) 51 to 98% by weight of the styrene/acrylate copolymer dispersion,
B)
a) 1 to 3% by weight of highly disperse silica,
c) 1 to 5% by weight of acrylic acid/acrylamide copolymer w/o emulsion.

3. An adhesive as claimed in claim 1 or 2, **characterized by** a pH value of > 7 and more particularly in the range from 7 to 10.

4. A process for the production of the adhesive claimed in any of claims 1 to 3, **characterized in that** the aqueous system of the polymer based on at least acrylic acid and acrylamide (component Bb) is added to the other components in a final step.

5. The use of the adhesive as claimed in at least one of claims 1, 2 or 3, **characterized in that** the adhesive is applied from a cartridge.

6. The use claimed in claim 5, **characterized in that** the adhesive is applied to the substrate in a layer thickness of up to 30 mm and more particularly up to 20 mm.

## Revendications

1. Adhésif à base d'une dispersion aqueuse de polymère avec addition d'agents épaississants ainsi que, le cas échéant, de charges, de pigments, d'agents de conservation, de solvants, de plastifiants ainsi que d'autres adjuvants, **caractérisé en ce qu'**on peut le produire à partir de
A) 10 à 98% en poids d'au moins une dispersion aqueuse d'un copolymère constitué au moins de styrène et d'acrylate d'alkyle ou respectivement de méthacrylate d'alkyle avec de 1 à 12 atomes de carbone dans le radical alkyle, la teneur en solide étant de 30 à 80% en poids,
B) un épaississant provenant de la combinaison d'au moins
a) 0,4 à 6% en poids d'acide silicique hautement dispersé comme épaississant inorganique, ainsi que
b) 1 à 10% en poids d'un système aqueux d'un polymère à base au moins d'acide acrylique et d'acrylamide avec une teneur en solide de 10 à 40% en poids, où l'on peut remplacer jusqu'à 90% en poids de ce système aqueux par au moins une des dispersions suivantes à partir d'un polymère à base d'acrylates, d'un polymère à base d'au moins l'acide acrylique et l'acide méthacrylique ou à base de polyuréthanes avec une teneur en solides de 20 à 40% en poids,
C) 0 à 88% en poids de charges,
D) 0 à 2% en poids de pigments,
E) 0 à 3% en poids d'adjuvants,
F) 0 à 40% en poids de plastifiant ainsi que
G) de l'eau.

2. Adhésif selon la revendication 1, contenant
A) 51 à 98% en poids de dispersion de copolymère styrène/acrylate,
B)
a) 1 à 3% en poids d'acide silicique hautement dispersé,
b) 1 à 5% en poids d'émulsion eau-dans-huile de copolymère acide acrylique/acrylamide.

3. Adhésif selon la revendication 1 ou 2, **caractérisé par** un pH supérieur à 7, en particulier de 7 à 10.

4. Préparation de l'adhésif selon l'une des revendications 1 à 3, **caractérisé en ce qu'**on mélange le système aqueux du polymère à base d'au moins l'acide acrylique et l'acrylamide (composant Bb) à la fin au reste des composants.

5. Utilisation de l'adhésif selon au moins une des revendications 1, 2 ou 3, **caractérisé en ce qu'**on applique l'adhésif à partir d'une cartouche.

6. Utilisation selon la revendication 5, dans laquelle on dépose l'adhésif en une épaisseur allant jusqu'à 30, en particulier jusqu'à 20 mm sur le substrat.
